# EUROPÄISCHE PATENTSCHRIFT

(11) **EP 2 368 020 B1**
(45) Veröffentlichungstag und Bekanntmachung des Hinweises auf die Patenterteilung: **01.05.2013**
(21) Anmeldenummer: 09799570.8
(22) Anmeldetag: 01.12.2009
(51) Int. Cl.: F01K 23/06, F02C 6/18, F25J 1/02

(54) **VERFAHREN ZUM BETREIBEN EINES TURBOVERDICHTERSTRANGS**
METHOD FOR OPERATING A TURBO COMPRESSOR TRAIN
PROCÉDÉ DE FONCTIONNEMENT D'UN TRAIN DE TURBOCOMPRESSEUR

(30) Priorität: 18.12.2008 DE 102008062355
(43) Veröffentlichungstag der Anmeldung: 28.09.2011
(73) Patentinhaber: Siemens Aktiengesellschaft, 80333 München (DE)
(72) Erfinder: KÖLSCHEID, Hans-Gerd, 47228 Duisburg (DE); PETERS, Klaus, 45479 Mülheim (DE)
(86) Internationale Anmeldenummer: PCT/EP2009/066168
(87) Internationale Veröffentlichungsnummer: WO 2010/069759

(56) Entgegenhaltungen:
- EP-A1- 0 758 045
- EP-A1- 1 512 855
- EP-A1- 1 903 189
- EP-A1- 1 911 939
- WO-A1-02/49998
- DE-A1- 2 102 770
- US-B1- 6 691 531

## Beschreibung

Die Erfindung betrifft ein Verfahren zum Betreiben eines Turboverdichterstranges.

Erdgas wird beispielsweise in einer Off-Shore-Förderung gewonnen und via eine Pipline an Land gefördert. An Land befindet sich eine großtechnische Chemieanlage, mit der das Erdgas in seine Bestandteile getrennt wird, die beispielsweise langkettige und kurzkettige Kohlenwasserstoffverbindungen sein können. Der Anteil des Erdgases bestehend aus den kurzkettigen Kohlenwasserstoffen wird nach einer Druckbeaufschlagung in ein Erdgasversorgungsnetz eingespeist und auf einem Erdgasmarkt angeboten. Der Vertrieb des Erdgases basiert auf der Nutzung des Erdgasversorgungsnetzes, so dass Länder, die beispielsweise an das Erdgasversorgungsnetz nicht , angeschlossen sind, von dem Erdgasmarkt abgeschnitten sind. Die Gründe dafür, weshalb diese Länder nicht an das Erdgasversorgungsnetz angeschlossen sind, liegen beispielsweise an deren geographischer Lage, die einen Anschluss dieser Länder an das Erdgasversorgungsnetz technisch schwierig oder unmöglich macht. Ist dieses Land beispielsweise vom Meer her zugänglich, so bietet sich die Möglichkeit dieses Land unter Nutzung der Schifffahrt zu beliefern. Hierfür wird das Erdgas mit einer Erdgasverflüssigungsanlage (engl: Liquid Natural Gas (LNG) Plant) im Fördergebiet verflüssigt, in ein Schiff verfrachtet, mit dem Schiff aus dem Fördergebiet zu dem Abnehmerland transportiert und dort zur Verteilung wieder vergast.

Die Entgegenhaltung WO 2005/024188 A2 beschreibt einen Turboverdichterstrang der eine Gasturbine sowie einen Generator und eine Dampfturbine aufweist, wobei die Dampfturbine zusammen mit dem Generator an die Turboverdichtereinheit kuppelbar ist.

Aus Entgegenhaltung EP 1 710400 A1 ist ein Verfahren zum Betreiben einer einwelligen Gas- und Dampfturbinenanlage mit Überholkupplung bekannt.

Die Entgegenhaltung US 5 386 687 A offenbart einen Turboverdichterstrang mit einem Antriebaggregat, das eine Gasturbine sowie einen Generator und eine Dampfturbine aufweist, wobei die Dampfturbine auf den Generator der Turboverdichtereinheit wirkt.

Die Patentanmeldung WO 02/49998 beschäftigt sich mit der Verbesserung einer Synthesegasanlage durch Installation erhöhter Verdichterleistung auch indem in verschiedenen Varianten Verdichter an Antriebsstränge angekuppelt werden.

Die Erdgasverflüssigungsanlage ist in dem Fördergebiet entweder an Land oder küstennah in einem Küstengewässer auf einer schwimmenden Insel angesiedelt. In der Erdgasverflüssigungsanlage wird das Erdgas in einem Kältekreislauf so stark abgekühlt, dass es sich verflüssigen lässt. Der Kältekreislauf weist herkömmlich zwei Turboverdichter auf, die von einer Gasturbine oder einem Elektromotor angetrieben werden. Bei einer Jahresproduktion der Erdgasverflüssigungsanlage von 5 bis 10 Megatonnen pro Jahr werden Einwellengasturbinen eingesetzt, wobei die beiden Turboverdichter an ihren Wellen miteinander gekuppelt sind. Herkömmliche Einwellengasturbinen geben bei niedrigen Drehzahlen nicht genügend Drehmoment ab, so dass mit ihnen die beiden Turboverdichter nicht gestartet werden können. Abhilfe schafft hier der Einsatz von einem Starter-Helfermotor, der an die Turboverdichter gekuppelt ist und beim Startvorgang ein zusätzliches Drehmoment bereitstellt, so dass die Turboverdichter mit der Gasturbine zusammen mit dem Starter-Helfermotor gestartet werden können.

Aufgabe der Erfindung ist es ein Verfahren zum Betreiben eines Turboverdichterstranges zu schaffen, wobei der Turboverdichterstrang einfach und energiesparend startbar und betreibbar ist.

Der Turboverdichterstrang für das erfindungsgemäße Verfahren weist eine Turboverdichtereinheit und zum Antreiben der Turboverdichtereinheit ein Antriebsaggregat auf, das aus einer Gasturbine sowie einem Generator und einer Dampfturbine bestehen kann. Die Dampfturbine ist zusammen mit dem Generator an die Turboverdichtereinheit und die Gasturbine mittels einer Kupplungseinrichtung kuppelbar. Die Kupplungseinrichtung weist eine Überholkupplung und einen Kupplungserreger auf, mit dem die Überholkupplung aus einem Ausrückzustand in einen Aktivzustand bringbar ist, in dem die Überholkupplung bei Synchrondrehzahl der Gasturbine und der Dampfturbine einrückt und, wenn die Überholkupplung eingerückt ist, bei einer Erhöhung der Drehzahl der Dampfturbine und des Generators ausrückt, so dass der Generator von der Dampfturbine mit einer höheren Drehzahl als die Turboverdichtereinheit von der Gasturbine antreibbar ist.

Die Turboverdichtereinheit weist bevorzugt einen Niederdruckturboverdichter und einen Hochdruckturboverdichter auf, die hintereinander geschaltet sind und als Einwellenverdichter ausgeführt sind, die an ihren Wellen miteinander mit einer zweiten Kupplung gekuppelt sind. Die Gasturbine ist bevorzugt in Axialbauweise ausgeführt und mit ihrer Verdichterwelle mit der Welle des Niederdruckturboverdichters mit einer ersten Kupplung gekuppelt. Ferner sind der Generator und die Dampfturbine an ihren Wellen mit einer dritten Kupplung gekuppelt.

Eine Erdgasverflüssigungsanlage für das erfindungsgemäße Verfahren weist einen ersten Kältekreislaufstrang, einen zweiten Kältekreislaufstrang und einen dritten Kältekreislaufstrang auf, wobei der zweite Kältekreislaufstrang und der dritte Kältekreislaufstrang jeweils von dem Turboverdichterstrang gebildet sind. Die Erdgasverflüssigungsanlage weist ferner bevorzugt eine Dampfschiene und einen Dampferzeuger auf, mit dem in die Dampfschiene Frischdampf einspeisbar ist, wobei mit dem Frischdampf der Dampfschiene die Dampfturbine des ersten Kältekreislaufstrangs, die Dampfturbine des zweiten Kältekreislaufstrangs und die Dampfturbine des dritten Kältekreislaufstrangs betreibbar sind. Ferner sind eine thermische Abgasleistung der Gasturbine des zweiten Kältekreislaufstrangs und eine thermische Abgasleistung der Gasturbine des dritten Kältekreislaufstrangs der Dampfschiene zuführbar.

Die Erdgasverflüssigungsanlage weist ein elektrisches Netz mit einer daran angeschlossenen elektrische Last auf, wobei in das elektrische Netz eine elektrische Leistung des Generators des zweiten Kältekreislaufstrangs und eine elektrische Leistung des Generators des dritten Kältekreislaufstrangs einspeisbar sind.

Das erfindungsgemäße Verfahren zum Betreiben des Turboverdichterstrangs weist die Schritte auf: Bereitstellen des Turboverdichterstrangs, wobei der Turboverdichterstrang im Stillstand ist und die Überholkupplung von dem Kupplungserreger in dem Ausrückzustand gehalten wird; Hochfahren der Dampfturbine unter Berücksichtigung der für die Dampfturbine aus Festigkeitsgründen notwendigen Haltepunkte, bis die Dampfturbine ihre Betriebstemperatur und die Betriebsdrehzahl des Turboverdichterstrangs erreicht hat; Herunterfahren der Dampfturbine bis zum Stillstand; Betätigen des Kupplungserregers, so dass die Überholkupplung aus dem Ausrückzustand in den Aktivzustand gebracht wird und dadurch einrückt, wodurch die Dampfturbine, der Generator, die Turboverdichtereinheit und die Gasturbine zusammengekuppelt sind; Hochfahren der Gasturbine zusammen mit der Dampfturbine bis der Turboverdichterstrang seine Betriebsdrehzahl erreicht hat.

Das Verfahren zum Betreiben des Turboverdichterstrangs weist ferner bevorzugt den Schritt auf: Erhöhung der Drehzahl der Dampfturbine, so dass die Überhohlkupplung ausrückt und der Generator von der Dampfturbine mit einer höheren Drehzahl als die Turboverdichtereinheit von der Gasturbine betrieben wird. Die Drehzahl der Turboverdichtereinheit und der Gasturbine liegt bevorzugt bei 3000 Umdrehungen pro Minute sowie die Drehzahl der Dampfturbine und des Generators liegt bevorzugt bei 3600 Umdrehungen pro Minute, so dass mit dem Generator in ein elektrisches Netz mit 60 Hz synchronisiert elektrische Leistung einspeisbar ist.

Als Alternative weist das Verfahren zum Betreiben des Turboverdichterstrangs bevorzugt den Schritt auf: Betreiben des Turboverdichterstrangs bei der Betriebsdrehzahl, wobei die Dampfturbine, der Generator, die Turboverdichtereinheit und die Gasturbine zusammengekuppelt sind und der Generator zusammen mit der Turboverdichtereinheit von der Dampfturbine und der Gasturbine angetrieben wird.

Im Folgenden wird eine bevorzugte Ausführungsform des Turboverdichterstrangs und der Erdgasverflüssigungsanlage jeweils zum Betrieb nach dem erfindungsgemäßen Verfahren anhand der beigefügten schematischen Zeichnungen erläutert. Es zeigt:
Fig. 1 eine schematische Darstellung einer Ausführungsform des Turboverdichterstrangs und
Fig. 2 eine schematische Darstellung einer Ausführungsform der Erdgasverflüssigungsanlage.

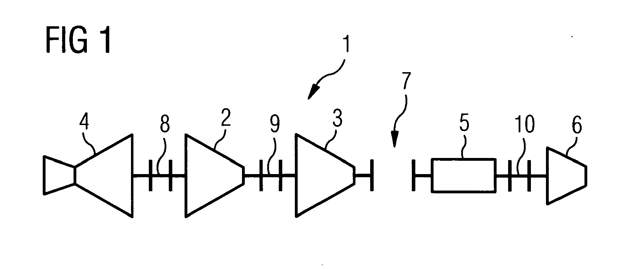

Wie es aus Fig. 1 ersichtlich ist weist ein Turboverdichterstrang 1 einen Niederdruckturboverdichter 2 und einen Hochdruckturboverdichter 3 auf, die hintereinander geschaltet sind und jeweils als ein Einwellenverdichter ausgeführt sind. Ferner weist der Turboverdichterstrang 1 eine in Axialbauweise ausgeführte Gasturbine 4 auf, die mit ihrem Verdichter an den Niederdruckturboverdichter 2 gekuppelt ist. Außerdem weist der Turboverdichterstrang 1 einen Generator 5 und eine Dampfturbine 6 auf, die zusammengekuppelt sind.

Die Dampfturbine 6 ist zusammen mit dem Generator 5 an den Hochdruckturboverdichter 3 mittels einer Kupplungseinrichtung 7 kuppelbar. Die Kupplungseinrichtung 7 weist eine Überholkupplung (nicht gezeigt) und einen Kupplungserreger (nicht gezeigt) auf, mit dem die Überholkupplung aus einem Ausrückzustand in einen Aktivzustand gebracht werden kann, in dem die Überholkupplung bei Synchrondrehzahl der Gasturbine 4 und der Dampfturbine 6 einrückt. Wenn die Überholkupplung eingerückt ist, rückt bei einer Erhöhung der Drehzahl der Dampfturbine 6 und des Generators 5 die Überholkupplung aus, so dass der Generator 5 von der Dampfturbine 6 mit einer höheren Drehzahl als der Niederdruckturboverdichter 2 und der Hochdruckturboverdichter 3 von der Gasturbine 4 angetrieben werden können.

Die Gasturbine 4 ist mit dem Niederdruckturboverdichter 2 mittels einer ersten Kupplung 8 gekuppelt. Der Niederdruckturboverdichter 2 und der Hochdruckturboverdichter 3 sind an ihren Wellen miteinander mit einer zweiten Kupplung 9 gekuppelt. Ferner sind der Generator 5 und die Dampfturbine 6 an ihren Wellen mit einer dritten Kupplung 10 gekuppelt.

Beim Anfahren des Turboverdichterstrangs 1 ist zuerst der Turboverdichterstrang 1 im Stillstand und die Überholkupplung ist von dem Kupplungserreger in dem Ausrückzustand gehalten. Es wird die Dampfturbine 6 gekuppelt mittels der dritten Kupplung 10 mit dem Generator 5 hochgefahren, wobei die für die Dampfturbine 6 aus Festigkeitsgründen notwendigen Haltepunkte eingehalten werden. Die Drehzahl der Dampfturbine 6 wird auf die Betriebsdrehzahl des Turboverdichterstrangs 1 erhöht und solange gehalten, bis die Dampfturbine 6 ihre Betriebstemperatur erreicht hat. Danach wird die Dampfturbine 6 wieder zum Stillstand heruntergefahren. Sobald die Dampfturbine 6 im Stillstand angelangt ist, wird der Kupplungserreger betätigt, so dass die Überholkupplung aus dem Ausrückzustand in den Aktivzustand gebracht wird. Dadurch rückt die Überholkupplung ein, wodurch die Dampfturbine 6, der Generator 5, der Niederdruckturboverdichter 2, der Hochdruckturboverdichter 3 und die Gasturbine 4 zusammengekuppelt sind. Sodann wird die Gasturbine 4 zusammen mit der Dampfturbine 6 hochgefahren, bis der Turboverdichterstrang 1 seine Betriebsdrehzahl erreicht hat.

Die Betriebsdrehzahl des Turboverdichterstrangs 1 liegt bei beispielsweise 3000 Umdrehungen pro Minute. Die von der Gasturbine 4 in den Turboverdichterstrang 1 abgegebene Wellenleistung liegt bei beispielsweise 164 MW und die von der Dampfturbine 6 gelieferte Wellenleistung beträgt beispielsweise 40 MW. In diesem Betriebszustand wird der Turboverdichterstrang 1 betrieben, wobei die Dampfturbine 6, der Generator 5, der Niederdruckturboverdichter 2, der Hochdruckturboverdichter 3 und die Gasturbine 4 zusammengekuppelt sind. Der Generator 5 wird zusammen mit dem Niederdruckturboverdichter 2 und dem Hochdruckturboverdichter 3 von der Dampfturbine 6 und der Gasturbine 4 angetrieben.

Alternativ kann die Drehzahl der Dampfturbine 6 erhöht werden auf beispielsweise 3600 Umdrehungen pro Minute, so dass die Überhohlkupplung ausrückt und der Generator 5 von der Dampfturbine 6 mit der höheren Drehzahl als die Turboverdichtereinheit 1 von der Gasturbine 4, nämlich bei 3000 Umdrehungen pro Minute, angetrieben wird. Bei der Drehzahl von 3600 Umdrehungen pro Minute kann mit dem Generator 5 eine elektrische Leistung in ein elektrisches Netz mit 60 Hz eingespeist werden.

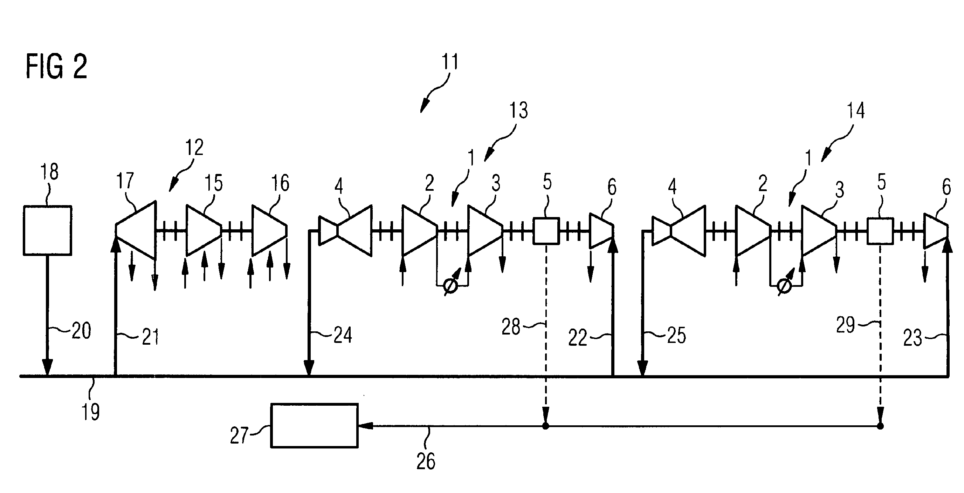

Wie es aus Fig. 2 ersichtlich ist weist eine Erdgasverflüssigungsanlage 11 einen ersten Kältekreislaufstrang 12, einen zweiten Kältekreislaufstrang 13 und einen dritten Kältekreislaufstrang auf 14. Der zweite Kreislaufstrang 13 und der dritte Kreislaufstrang 14 sind jeweils von dem Turboverdichterstrang 1 gebildet. Die Erdgasverflüssigungsanlage 11 weist ferner einen Dampferzeuger 18 und eine Dampfschiene 19 auf, wobei mit dem Dampferzeuger 18 eine Frischdampfleistung 20 in die Dampfschiene 19 eingespeist wird. Von der Dampfschiene 19 abgezweigt wird die Dampfturbine 17 des ersten Kältekreislaufstrangs 12 mit einer Frischdampfleistung 21, die Dampfturbine 6 des zweiten Kältekreislaufstrangs 13 mit einer Frischdampfleistung 22 und die Dampfturbine 6 des dritten Kältekreislaufstrangs 14 mit einer Frischdampfleistung 23 betrieben. Ferner werden die thermischen Abgasleistungen 24, 25 der Gasturbinen 4 des zweiten Kältekreislaufstrangs 13 und des dritten Kältekreislaufstrangs 14 der Dampfschiene 19 zugeführt.

Die Erdgasverflüssigungsanlage 11 weist außerdem ein elektrisches Netz 26 mit 60 Hz auf, an das eine elektrische Last 27 angeschlossen ist. In das elektrische Netz 26 werden von den Generatoren 5 des zweiten Kältekreislaufstrangs 13 und des dritten Kältekreislaufstrangs 14 die elektrische Leistungen 28. und 29 eingespeist. Dadurch, dass die Generatoren 5 bei 3600 Umdrehungen pro Minute betrieben werden, werden die Generatoren 5 mit dem elektrischen Netz 26 synchronisiert betrieben.

Bei der in Fig. 2 gezeigten Ausführungsform betragen die Frischdampfleistung 20 des Dampferzeugers 18 und die Frischdampfleistung 21 der Dampfturbine 6 des ersten Kältekreislaufstrangs 12 jeweils 150 MW. Ferner betragen die Frischdampfleistung 22 der Dampfturbine 6 des zweiten Kältekreislaufstrangs 13 und die Frischdampfleistung 23 der Dampfturbine 6 des dritten Kältekreislaufstrangs 14 jeweils 40 MW. Die thermische Abgasleistung 24 der Gasturbine 4 des zweiten Kältekreislaufstrangs 13 und die thermische Abgasleistung 25 der Gasturbine 4 des dritten Kältekreislaufstrangs 14 betragen jeweils 75 MW. Daraus ergibt sich wirkungsgradberücksichtigt ein Leistungsüberschuss bei den Generatoren 5, so dass die elektrische Leistung 28 des Generators 5 des zweiten Kältekreislaufstrangs 13 und die elektrische Leistung 29 des Generators 5 des dritten Kältekreislaufstrangs 14 jeweils 40 MW betragen. Somit steht der elektrischen Last 27 eine elektrische Leistung von 80 MW bei 60 Hz zur Verfügung.

## Patentansprüche

1. Verfahren zum Betreiben eines Turboverdichterstrangs, mit den Schritten:
- Bereitstellen des Turboverdichterstrangs (1)
mit einer Turboverdichtereinheit (2, 3, 9) und
mit einem Antriebsaggregat (4, 5, 6, 8, 10) zum Antreiben der Turboverdichtereinheit (2, 3, 9),
wobei das Antriebsaggregat eine Gasturbine (4) sowie einen Generator (5) und eine Dampfturbine (6) aufweist,
wobei die Dampfturbine (6) zusammen mit dem Generator (5) an die Turboverdichtereinheit (2, 3, 9) und die Gasturbine (4)
mittels einer Kupplungseinrichtung (7) kuppelbar ist, wobei die Kupplungseinrichtung (7) eine Überholkupplung und
einen Kupplungserreger aufweist, mit dem die Überholkupplung aus einem Ausrückzustand in einen Aktivzustand bringbar ist, Synchrondrehzahl in welchem die Überholkupplung bei Synchrondrehzahl der Gasturbine (4) und der Dampfturbine (6) einrückt und, wenn die Überholkupplung eingerückt ist, bei einer Erhöhung der Drehzahl der Dampfturbine (6) und des Generators (5) ausrückt, so dass der Generator (5) von der Dampfturbine (6) mit einer höheren Drehzahl als die Turboverdichtereinheit (2, 3, 9) von der Gasturbine (4) antreibbar ist,
- wobei der Turboverdichterstrang (1) im Stillstand ist und die Überholkupplung von dem Kupplungserreger in dem Ausrückzustand gehalten wird;
- Hochfahren der Dampfturbine (6) unter Berücksichtigung der für die Dampfturbine (6) aus Festigkeitsgründen notwendigen Haltepunkte, bis die Dampfturbine (6) ihre Betriebstemperatur und die Betriebsdrehzahl des Turboverdichterstrangs (1) erreicht hat;
- Herunterfahren der Dampfturbine (6) bis zum Stillstand;
- Betätigen des Kupplungserregers, so dass die Überholkupplung aus dem Ausrückzustand in den Aktivzustand gebracht wird und dadurch einrückt, wodurch die Dampfturbine (6), der Generator (5), die Turboverdichtereinheit (2, 3, 9) und die Gasturbine (4) zusammengekuppelt sind;
- Hochfahren der Gasturbine (4) zusammen mit der Dampfturbine (6) bis der Turboverdichterstrang (2, 3, 9) seine Betriebsdrehzahl erreicht hat.

2. Verfahren gemäß Anspruch 1, mit dem Schritt:
- Erhöhung der Drehzahl der Dampfturbine (6), so dass die Überhohlkupplung ausrückt und der Generator (5) von der Dampfturbine (6) mit einer höheren Drehzahl als die Turboverdichtereinheit (2, 3, 9) von der Gasturbine (4) betrieben wird.

3. Verfahren gemäß Anspruch 2, wobei die Drehzahl der Turboverdichtereinheit (2, 3, 9) und der Gasturbine (4) bei 3000 Umdrehungen pro Minute sowie die Drehzahl der Dampfturbine (6) und des Generators (5) bei 3600 Umdrehungen pro Minute liegen, so dass mit dem Generator (5) in ein elektrisches Netz (26) mit 60 Hz synchronisiert elektrische Leistung einspeisbar ist.

4. Verfahren gemäß Anspruch 1, mit dem Schritt:
- Betreiben des Turboverdichterstrangs (1) bei der Betriebsdrehzahl, wobei die Dampfturbine (6), der Generator (5), die Turboverdichtereinheit (2, 3, 9) und die Gasturbine (4) zusammengekuppelt sind und der Generator (5) zusammen mit der Turboverdichtereinheit (2, 3, 9) von der Dampfturbine (6) und der Gasturbine (4) angetrieben wird.

## Claims

1. Method for operating a turbocompressor train with the steps:
- making available the turbocompressor train (1) with a turbocompressor unit (2, 3, 9) and with a drive unit (4, 5, 6, 8, 10) for driving the turbocompressor unit (2, 3, 9), wherein the drive unit has a gas turbine (4) and also a generator (5) and a steam turbine (6), wherein the steam turbine (6) together with the generator (5) can be coupled to the turbocompressor unit (2, 3, 9) and to the gas turbine (4) by means of a coupling device (7), wherein the coupling device (7) has an overrunning clutch and a clutch exciter, by which the overrunning clutch can be brought from a disengaged state to an engaged state in which the overrunning clutch is engaged in the event of synchronous speed of the gas turbine (4) and the steam turbine (6) and, if the overrunning clutch is engaged, is disengaged in the event of an increase of the rotational speed of the steam turbine (6) and the generator (5), so that the generator (5) can be driven by the steam turbine (6) at a higher rotational speed than the turbocompressor unit (2, 3, 9) can be driven by the gas turbine (4),
- wherein the turbocompressor train (1) is held in the stationary state and the overrunning clutch is held in the disengaged state by the clutch exciter;
- running up the steam turbine (6) - taking into consideration the holding points which are necessary for the steam turbine (6) for reasons of stability - until the steam turbine (6) has reached its operating temperature and the operating speed of the turbocompressor train (1);
- running down the steam turbine (6) to the stationary state;
- operating the clutch exciter so that the overrunning clutch is brought from the disengaged state to an active state and consequently engaged, as a result of which the steam turbine (6), the generator (5), the turbocompressor unit (2, 3, 9) and the gas turbine (4) are coupled together;
- running up the gas turbine (4) together with the steam turbine (6) until the turbocompressor train (2, 3, 9) has reached its operating speed.

2. Method according to Claim 1, with the step:
- increasing the rotational speed of the steam turbine (6) so that the overrunning clutch is disengaged and the generator (5) is operated by the steam turbine (6) at a higher rotational speed than the turbocompressor unit (2, 3, 9) is operated by the gas turbine (4).

3. Method according to Claim 2, wherein the rotational speed of the turbocompressor unit (2, 3, 9) and the gas turbine (4) lies at 3000 revolutions per minute and the rotational speed of the steam turbine (6) and the generator (5) lies at 3600 revolutions per minute so that electric power synchronized at 60 Hz can be supplied to an electricity network (26) by the generator (5).

4. Method according to Claim 1, with the step:
- operating the turbocompressor train (1) at the operating speed, wherein the steam turbine (6), the generator (5), the turbocompressor unit (2, 3, 9) and the gas turbine (4) are coupled together and the generator (5) together with the turbocompressor unit (2, 3, 9) are driven by the steam turbine (6) and the gas turbine (4).

## Revendications

1. Procédé faire fonctionner un train de turbocompresseur comprenant les stades dans lesquels :
- on se procure le train ( 1 ) de turbocompresseur ayant une unité ( 2, 3, 9 ) de turbocompresseur et un groupe ( 4, 5, 6, 8 ) d'entraînement pour l'entraînement de l'unité ( 2, 3, 9 ) de turbocompresseur,
dans lequel le groupe d'entraînement a une turbine ( 4 ) à gaz ainsi qu'une génératrice ( 5 ) et une turbine ( 6 ) à vapeur, dans lequel la turbine ( 6 ) à vapeur peut ensemble avec la génératrice ( 5 ) être accouplée à l'unité ( 2, 3, 9 ) de turbocompresseur et à la turbine ( 4 ) à gaz au moyen d'un dispositif ( 7 ) d'accouplement,
dans lequel le dispositif ( 7 ) d'accouplement a un embrayage à roue libre et un excitateur d'embrayage par lequel l'embrayage à roue libre peut passer d'un état désembrayé à un état actif, dans lequel l'embrayage à roue libre embraie pour une vitesse de rotation synchrone de la turbine ( 4 ) à vapeur et de la turbine ( 6 ) à vapeur et, si l'embrayage à roue libre est embrayée, débraie à une augmentation de la vitesse de rotation de la turbine ( 6 ) à vapeur et de la génératrice ( 5 ), de sorte que la génératrice ( 5 ) peut être entraînée par la turbine ( 6 ) à vapeur à une vitesse de rotation plus grande que l'unité ( 2, 3, 9 ) de turbocompresseur par la turbine ( 4 ) à gaz,
- dans lequel le train ( 1 ) de turbocompresseur est à l'arrêt et l'embrayage à roue libre est maintenu dans l'état débrayé par l'excitateur d'embrayage,
- on fait fonctionner à fond la turbine ( 6 ) à vapeur en tenant compte des points d'arrêt nécessaires de la turbine ( 6 ) à vapeur pour des raisons de résistance jusqu'à ce que la turbine ( 6 ) à vapeur ait atteint sa température de fonctionnement et la vitesse de rotation de fonctionnement du train ( 1 ) de turbocompresseur,
- on ralentit la turbine ( 6 ) à vapeur jusqu'à l'arrêt,
- on actionne l'excitateur d'embrayage de manière à ce que l'embrayage à roue libre passe de l'état désembrayé à l'état actif et embraye ainsi de sorte que la turbine ( 6 ) à vapeur, la génératrice ( 5 ), l'unité ( 2, 3, 9 ) de turbocompresseur et la turbine ( 4 ) à gaz soient accouplées,
- on fait fonctionner à fond la turbine ( 4 ) à gaz ensemble avec la turbine ( 6 ) à vapeur jusqu'à ce que le train ( 2, 3, 9 ) de turbocompresseur ait atteint sa vitesse de rotation de fonctionnement.

2. Procédé suivant la revendication 1, comprenant le stade :
- augmentation de la vitesse de rotation de la turbine ( 6 ) à vapeur de sorte que l'embrayage à roue libre débraie et que la génératrice ( 5 ) soit mise en fonctionnement par la turbine ( 6 ) à vapeur à une vitesse de rotation plus grande que l'unité ( 2, 3, 9 ) de turbocompresseur par la turbine ( 4 ) à gaz.

3. Procédé suivant la revendication 2,
dans lequel la vitesse de rotation de l'unité ( 2, 3, 9 ) de turbocompresseur et de la turbine ( 4 ) à gaz est de 3000 tours à la minute et la vitesse de rotation de la turbine ( 6 ) à vapeur et de la génératrice ( 5 ) est de 3600 tours à la minute de sorte que l'on peut accumuler de la puissance électrique synchronisée à 60 Hz par la génératrice ( 5 ) dans un réseau ( 6 ) électrique.

4. Procédé suivant la revendication 1, comprenant le stade :
- on fait fonctionner le train ( 1 ) de turbocompresseur à la vitesse de rotation de fonctionnement, dans lequel la turbine ( 6 ) à vapeur, la génératrice ( 5 ), l'unité ( 2, 3, 9 ) de turbocompresseur et la turbine ( 4 ) à gaz sont accouplées et la génératrice ( 5 ) est mise en fonctionnement avec l'unité ( 2, 3, 9 ) de turbocompresseur par la turbine ( 6 ) à vapeur et par la turbine ( 4 ) à gaz.
